Europäisches Patentamt

European Patent Office

Office européen des brevets

(19)

(11) EP 0 889 483 A1

## (12) EUROPEAN PATENT APPLICATION

(43) Date of publication:
07.01.1999 Bulletin 1999/01

(51) Int. Cl.⁶: $G21K\ 4/00$, $H01J\ 9/22$, $C09K\ 11/84$

(21) Application number: 97111240.4

(22) Date of filing: 04.07.1997

(84) Designated Contracting States:
AT BE CH DE DK ES FI FR GB GR IE IT LI LU MC NL PT SE

(71) Applicant: Imation Corp.
St. Paul, Minnesota 55164-0898 (US)

(72) Inventors:
- Magro, Cristophe
  17016 Ferrania (Savona) (IT)
- Morlotti, Romano
  17016 Ferrania (Savona) (IT)

- Heintz, Jean-Marc,
  Château Brivazac
  33608 Pessac cedex (FR)
- Letullier, Pierre,
  Château Brivazac
  33608 Pessac cedex (FR)

(74) Representative:
Allaix, Roberto, Dr.
Imation S.p.A.,
Intellectual Property Department,
Via Martiri della Libertà, 57
17016 Ferrania (Savona) (IT)

(54) **Sintered x-ray intensifying screen and method for the manufacturing thereof**

(57) The present invention relates to a method for manufacturing radiographic intensifying screens comprising the steps of (1) preparing a phosphor dispersion, (2) spraying said phosphor dispersion onto a substrate, and (3) sintering the resulting phosphor layer and to an improved X-ray intensifying screen consisting essentially of a support base, a binderless phosphor layer and a top-coat, wherein said binderless phosphor layer comprises a sintered phosphor.

Fig. 1

Description

**FIELD OF THE INVENTION**

The present invention relates to a new method for manufacturing radiographic intensifying screens comprising a binderless phosphor layer coated onto an inert base and to the radiographic screen obtained therefrom.

**BACKGROUND OF THE ART**

It is known in the art of medical radiography to employ intensifying screens to reduce the X-ray dosage to the patient. Intensifying screens absorb the X-ray radiation and emit electromagnetic radiation which can be better absorbed by silver halide emulsion layers. Another approach to reduce the X-ray dosage to the patient is to coat two silver halide emulsion layers on the opposite sides of a support to form a duplitized radiographic element.

Accordingly, it is a common practice in medical radiography to use a radiographic assembly consisting of a duplitized radiographic element interposed between a pair of front and back screens.

The typical structure of an intensifying screen comprises a support and a phosphor layer coated thereon. The phosphor layer comprises a fluorescent substance able to emit light when exposed to X-ray, mixed with a binder. Additionally, a primer layer is sometimes provided between the fluorescent layer and the substrate to assist in bonding the fluorescent layer to the substrate, and a reflective layer is sometimes provided between the substrate (or the primer) and the fluorescent layer. Finally, a protective layer for physically and chemically protecting the screen is usually provided on the surface of the fluorescent layer.

Intensifying screens are usually obtained by preparing a dispersion of the phosphor/binder mixture in an appropriate solvent and coating such a dispersion on a support using any well known coating method (such as, for example, doctor blade, roll coater, knife coater and the like). After the coating the solvent is removed from the phosphor layer.

A well known problem of intensifying screens relates to the sharpness of the resulting image. The presence of the intensifying screen reduces the sharpness of the resulting image, in particular when fast screens are used. This is due to the large grain size of fluorescent crystals and to the high phosphor layer thickness employed to realize the fast screens. On the other hand, there are situations wherein a reduction of exposure is of prime importance in spite of some sacrifice in image sharpness.

Another critical problem of intensifying screens relates to the noise or granularity of the resulting image. Granularity of an intensifying screen can be improved by increasing the phosphor coverage at constant packing density, but this negatively affects sharpness. Sharpness and granularity concur together to define the quality of the resulting radiographic image.

Binderless and high phosphor packing density layers are suitable to get relevant improvements in efficiency, sharpness and overall noise when compared to the conventional phosphor-binder layers for various X-ray applications, as described in EP 175,578, EP 253,348, and Y.Ito et al., Japanese Journal of Applied Physic, Vol. 27, No. 8, pp. 1371-1373 (1988).

Several techniques are proposed to get binderless phosphor layers. Examples of such techniques are vapor deposition method described in EP 230,314, spraying method described in EP 175,578, and plasma-spraying described in US 4,475,032..

Other techniques such as tap-casting (EP 253,348) and reactive spray pyrolysis (EP 655,748) are proposed in combination with a sintering step to get high density layers of X-ray phosphors.

Some $Gd_2O_2S$ based sintered polycrystalline X-ray sensors are described in literature as scintillators for medical Computerized Tomography. These typically $Gd_2O_2S$:Pr,Ce,F based sensors (for example a 1mm x 1mm x 30mm bar) are obtained by hot isostatic pressing, as described in Y.Ito et al., Japanese Journal of Applied Physic, Vol. 27, No. 8, pp. 1371-1373 (1988) and B. Grabmaier et al., Phys. Stat. Sol. (a) 130 pp 183-187(1992). This method, however, has been found to be neither desirable nor convenient for manufacturing large intensifying screens having the sensitivity and image sharpness required in radiography, in particular those X-ray intensifying screens using rare earth oxysulfide phosphors, and in particular terbium activated gadolinium oxysulfide direct phosphors $Gd_2O_2S$:Tb.

**SUMMARY OF THE INVENTION**

The present invention relates to a new method for manufacturing radiographic intensifying screens comprising the following steps:

a. preparing a phosphor dispersion,
b. spraying said phosphor dispersion onto a substrate, and
c. sintering the resulting phosphor layer.

In another aspect, the present invention relates to the radiographic screen obtained with the above method, said screen consisting in a substrate, a binderless phosphor layer of rare earth oxysulfide, and a protective top-coat.

According to this invention, the amount of light emitted by the layer containing the phosphor, that is the sensitivity of the X-ray intensifying screen, is improved due to the higher packing density of the phosphor layer obtained with the method of the present invention as compared to a phosphor layer of the same thickness which is obtained by conventional coating processes. The binderless phosphor layer packing density, and consequently, the amount of air trapped in it, depends on the sintering process conditions. The reduction of air in the binderless phosphor layer also increases the emitted light by reducing scattering. Further, the thickness of the phosphor layer can be reduced while maintaining the sensitivity of the screen to that of a conventional screen. The screen of this invention can thus provide an image of higher sharpness and sensitivity.

## BRIEF DESCRIPTION OF THE DRAWING

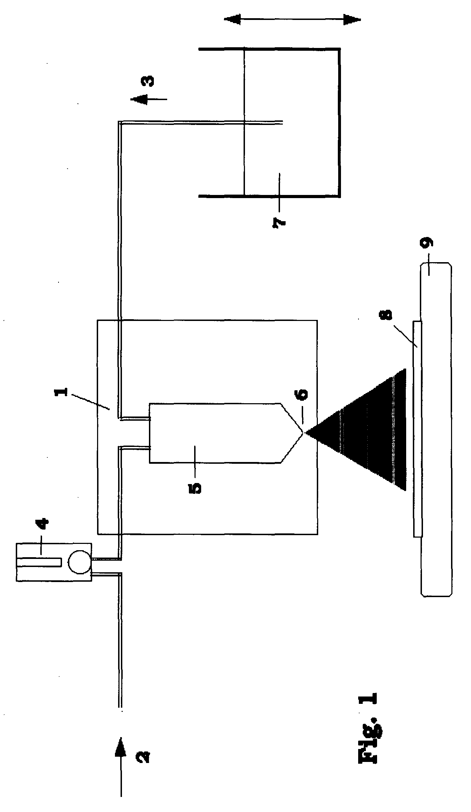

Fig. 1 is a schematic illustration of the spraying apparatus useful for applying the method of the present invention.

## DETAILED DESCRIPTION OF THE INVENTION

According to the present invention the phosphor powder is dispersed in a proper dispersing medium to prepare a phosphor dispersion. The choice of the dispersing medium is not particularly limited, provided that the resulting dispersion can be homogeneously sprayed onto the substrate and that the dispersing medium can be removed during the sintering process. The dispersing medium can be solid or liquid. Examples of useful solid dispersing medium are polymeric materials, solid hydrocarbons, synthetic and natural waxes, and the like preferably having a softening point in the range of from 50 to 150°C, more preferably from 50° to 120°C. The dispersion is preferably made in an organic or inorganic liquid dispersing medium, and more preferably is an aqueous dispersion. The aqueous dispersion is preferably made at neutral pH, but it can also be made at pH lower than or higher than 7.

When using a liquid dispersing medium, the weight ratio between phosphor and dispersing medium ranges from 1:10 to 2:1, preferably from 1:5 to 1.5:1, and more preferably from 1:2 to 1:1. The viscosity of the resulting liquid dispersion is an important requirement of the phosphor dispersion. A too high or too low viscosity can negatively affect the spraying step. A too high viscosity makes difficult the spraying step and a too low viscosity can result in an unstable dispersion before spraying and in an uneven coating after spraying. The viscosity range of the liquid dispersion is preferably from 10 to 1000 cps, more preferably from 100 to 500 cps, and most preferably from 200 to 300 cps at room temperature.

When using a solid dispersing medium, the weight ratio between the phosphor and the dispersing medium ranges from 10:1 to 100:1, and preferably from 20:1 to 80:1.

Some additives can be added to the phosphor dispersion for improving the stability of the dispersion and for enhancing the adhesion of the sprayed dispersion onto the substrate. Non-ionic and ionic surfactants, alumina silicates, polyelectrolytes, and the like are examples of useful additives. The amount of additive in the phosphor dispersion ranges from 0.1 to 10%, preferably from 1 to 5% by weight of phosphor.

The phosphor dispersion is simply prepared by adding to a vessel containing the dispersing medium and provided by a mixing equipment the proper amount of the dispersion components and mixing until to a stable dispersion is obtained. The phosphor employed in the present invention to prepare the phosphor dispersion can be a direct emission phosphor, that is a phosphor which, upon irradiation of high energy radiation (X-rays), emits a luminescence corresponding to the dose of the initial irradiation of the high energy radiation. Alternatively, a storage phosphor, that is phosphor which can emit a stimulated fluorescence when irradiated with a stimulating radiation after high energy irradiation (X-rays), can be used. From a practical standpoint, both direct emission and storage phosphors are desired to emit light in a portion of the electromagnetic spectrum ranging from near UV to near IR, preferably in the range of from 300 to 1000 nm.

Direct emission phosphors which may be used in the method of the present invention include rare earth activated rare earth oxysulfide phosphors, such as, for example, $Gd_2O_2S:Tb$, rare earth activated rare earth oxyhalide phosphors, such as, for example, LaOBr:Tm, rare earth borate phosphors, such as, for example, $LaBO_4$, rare earth phosphate phosphors, such as, for example, $YPO_4$, rare earth tantalate phosphors, such as, for example, $YTaO_4$, alkaline earth sulfate phosphors, such as, for example, $BaSO_4:Pb$, rare earth activated alkaline earth fluoro halide phosphors, such as, for example, BaFBr:Eu, rare earth or alkaline earth silicate phosphors, such as, for example, $Gd_2SiO_5$ and $Ba_2SiO_5:Pb$, rare earth activated rare earth oxyde phosphors, such as, for example, $Y_2O_3:Eu$ and $Y_2O_3:Gd$, alkali and alkaline earth halide phosphors, such as, for example, CsI and $BaF_2$, rare earth activated rare earth aluminate phosphors, such as, for example, $GdAlO_3:Tb$, alkaline earth tungstate phosphors, such as, for example, $CaWO_4$, alkali metal activated rare earth niobate or tantalate phosphors, and Zn and Cd based sulfide phosphors. Useful examples of rare earth element to be employed in the above phosphors are selected from yttrium, europium, lanthanum, gadolinium, lutetium, terbium, cerium, praseodymium, thulium, dysprosium, ytterbium, holmium, and erbium.

These direct emission phosphors have been extensively described in the patent literature, for example in US Patents 4,225,653, 3,418,246, 3,418,247, 3,725,704, 3,617,743, 3,974,389, 3,591,516, 3,607,770, 3,666,676, 3,795,814, 4,405,691, 4,311,487 and 4,387,141, BE 703,998 and 757,815, in EP 202,875 and by Buchanan et a., J. Applied Physics, vol. 9, 4342-4347, 1968, and by Clapp and Ginther, J. of the Optical Soc. of America, vol. 37, 355-362, 1947.

Storage phosphors which may be used in the method of the present invention include (1) rare earth activated alkaline earth metal fluoro halide phosphors as described in US 4,239,968, US, 4,539,138, DE 2,928,245, EP 44,516, JP 56/116,777 and JP 57/23,675, (2) cerium or terbium activated rare earth halide phosphors as described in US 4,236,078, (3) cerium activated rare earth oxyhalide phosphors as described in JP 58/69,281, (4) rare earth activated strontium sulfide and rare earth oxyde phosphors as described in US 3,859,527, (5) mixtures of europium activated alkali metal and alkaline earth metal halide phosphors as described in US 5,458,811, US 4,505,989, US 4,999,515 and JP 59/56,479, (6) bismuth activated alkali metal halide as described in US 4,780,375, (7) rare earth activated alkaline earth halosilicates and rare earth halosilicates, and (8) alkali halide, such as, for example, Eu activated NaCl and KCl.

References to other well known phosphors can be found in Research Disclosure, Vol. 184, August 1979, Item 18431, Section IX.

Particularly suitable phosphors for use in the method of the present invention are rare earth activated rare earth oxysulfide phosphors represented by the following general formula:

$$(Ln_{1-a-b}, Ln'_a, Ln''_b)_2O_2S$$

wherein Ln is at least one rare earth element selected from lanthanum, gadolinium, yttrium and lutetium, Ln' is at least one rare earth element selected from terbium, praseodymium, and europium, Ln" is at least one rare earth element selected from cerium, dysprosium, thulium, holmium, erbium, and ytterbium and a and b are numbers meeting the conditions $0.0005 \leq a \leq 0.09$ and $0 \leq b \leq 0.01$, respectively. Most preferably, the phosphor employed in the process of the present invention is a terbium activated gadolinium oxysulfide.

The grain size of the phosphor powder can range from 0.1 to 20 $\mu$m, preferably from 0.1 to 10 $\mu$m, and more preferably from 0.1 to 5 $\mu$m. The choice of the grain size depends on the desired results, in terms of sensitivity and image quality. The phosphor powder can also be obtained from a mixture of two or more phosphor powders having different grain size. This particular embodiment can be more favorable because it promotes a higher packing density of the phosphor layer obtained with the method of the present invention. The phosphor powder can also be obtained from a blend of two or more different phosphors.

The phosphor powder dispersion is then coated on a proper substrate in order to get an uniformly coated phosphor layer.

The choice of the proper substrate depends on various factors to be considered, such as, for example, its thermal conductivity and stability, as well as its mechanical resistance, its chemical inertness with the phosphor layer components, and the like. Examples of proper substrates include metal sheets such as aluminum foil and aluminum alloy foil, monocrystalline Si sheets, $SiO_2$ sheets, $Al_2O_3$ sheets, corderite sheets, steatite sheets and other ceramic sheets. Particularly useful supports in the method of the present invention are sintered $Al_2O_3$ sheets and flexible $Al_2O_3$ fiber-based sheets. Sintered $Al_2O_3$ sheets and $Al_2O_3$ fiber-based sheets are good thermal conductors, thermally stable, chemically inert regarding the phosphor, and have a good mechanical resistance, low shrinkage at high temperatures, a low X-ray absorption and a low weight. The substrate thickness is chosen between 0.1 and 1 mm, preferably from 0.2 and 0.7 mm.

The phosphor dispersion is then sprayed on the substrate. Any spraying method and apparatus known in the art can be used in the practice of the present invention, such as those methods described in G.L.Schneberger, "Understanding Paint and Painting Processes" 2nd Edition, Hitchcock Publishing Co., Hitchcock Building, Wheaton, Illinois, provided that the resulting coating is uniform and uneven. The spraying coating method is performed, for example, with the apparatus schematically illustrated in Fig. 1. The apparatus 1 comprises two inlet flows, the air flow 2 being controlled by a flowmeter 4 and the phosphor dispersion flow 3 depending on the dispersion concentration and the dispersion height, that is the height difference between the nozzle 6 of the sprayer 5 and the dispersion containing vessel 7. The apparatus 1 sprays the phosphor dispersion on the substrate 8 supported by the plate 9, which is movable along its longitudinal and transversal axes.

During the coating step, the substrate is preferably placed on a hotplate. The hotplate promotes the evaporation of the liquid dispersing medium and the softening of the solid dispersing medium. As a result, the adhesion of the phosphor to the substrate is improved.

In case of liquid dispersion, if the temperature of the substrate is too much lower than the boiling point of the liquid dispersing medium it can not completely evaporate and the residual can promote the formation of cracks. The temperature of the substrate is preferably kept at a value not lower than 20°C below the boiling point of the dispersing medium, more preferably, not lower than 10°C below the boiling point of the dispersing medium. If the temperature is too much higher than the boiling point of the liquid dispersing medium the phosphor particles adhesion to the substrate could be poor. The temperature of the substrate is preferably kept at a value not higher than 50°C above the boiling point of the dispersing medium, and more preferably not higher than 30°C above the boiling point of the dispersing medium.

When using a solid dispersing medium, the substrate is preferably maintained at a temperature equal to or higher than the softening point of the solid dispersing medium. The temperature of the substrate is preferably held at no more than 20°C above the softening point of the solid dispersing medium.

A compression step can be perfomed after the spraying step for improving the phosphor packing density. The compression step is performed by uniaxially or isostatically applying a pressure of from 10 to 500 MPa, preferably from 30 to 150 MPa onto the sprayed phosphor layer. If the pressure is too high the phosphor particles can be damaged.

The phosphor coated substrate is then subjected to the sintering step. The phosphor coated substrate is subjected to a preliminary burn-off treatment to eliminate organic additives and dispersing medium and then the temperature is increased for performing the sintering step. The burn-off treatment is preferably conducted at a temperature of from 150° to 600°C, more preferably from 300° to 500°C, and most preferably from 400° to 500°C, for a period of time of from 1 to 5 hours, preferably from 2 to 4 hours, and more preferably of about 3 hours. The sintering step is preferably carried out at a temperature of from 400° to 1700°C, more preferably from 1000° to 1500° for a period of time of up to 24 hours, preferably of up to 10 hours. The temperature increasing ramp to reach the above mentioned burn-off and sintering temperatures should be controlled. The temperature ramp of the burn-off treatment is preferably kept constant at a value in the range of from 30° to 100°C per hour, more preferably from 50° to 80°C per hour, and most preferably at about 60°C per hour. The temperature ramp of sintering step is preferably kept constant at a value in the range of from 100° to 500°C per hour, more preferably from 200° to 400°C per hour, and most preferably from 250° to 350°C per hour.

The sintering step is preferably carried out in a furnace under controlled oxygen-free atmosphere, such as, a pure nitrogen atmosphere or a hydrogen and nitrogen mixture atmosphere. By the term "oxygen-free" is meant a level of oxygen lower than 20 ppm. In case of oxysulfide phosphors, the presence of small amounts (up to 5% by volume) of sulfur in the furnace atmosphere could be advantageous to avoid degradation of the phosphor.

The resulting phosphor screen consists essentially of the substrate and the phosphor layer which comprises the sintered phosphor powder at a packing density higher than 50%, preferably higher than 70% and more preferably higher than 80%. The packing density can be calculated according to the following formula:

$$PD\% = 100 \, \frac{d_1}{d_o}$$

wherein $d_1$ is the density of the phosphor layer and $d_0$ is the phosphor density.

The coating weight of the phosphor in the resulting phosphor layer can vary depending on the characteristics required by the resulting phosphor screen. A coating weight range between 100 and 1200 $g/m^2$ is usually employed for a range of applications starting from a very high image quality phosphor screen to a very high sensitivity phosphor screen.

In another aspect, the present invention relates to a radiographic intensifying screen obtained with the above method, said screen consisting in a substrate, a binderless phosphor layer of rare earth oxysulfide, and a protective topcoat.

The phosphors preferably employed in the intensifying screen of the present invention are rare earth activated rare earth oxysulfide phosphors represented by the following general formula:

$$(Ln_{1-a-b}, Ln'_a, Ln''_b)_2O_2S$$

wherein Ln is at least one rare earth element selected from lanthanum, gadolinium, yttrium and lutetium, Ln' is at least one rare earth element selected from terbium, praseodymium, and europium, Ln" is at least one rare earth element selected from cerium, dysprosium, thulium, holmium, erbium, and ytterbium and a and b are numbers meeting the conditions $0.0005 \leq a \leq 0.09$ and $0 \leq b \leq 0{,}01$, respectively. In the practice of the present invention, a particularly useful rare earth oxysulfide phosphor is a gadolinium oxysulfide phosphor doped with terbium represented by the formula $Gd_2O_2S{:}Tb$ having more than 70% of its light emission in the green portion of the electromagnetic spectrum.

In the phosphor screen of the present invention, a protective layer for physically and chemically protecting the fluorescent layer is generally provided on the surface of the fluorescent layer. The protective layer may be provided on the fluorescent layer by directly applying thereto a coating dispersion to form the protective layer thereon, or may be provided thereon by laminating or adhering thereto the protective layer formed beforehand. As the material of the protective layer, a conventional polymeric material for a protective layer such as nitrocellulose, ethylcellulose, cellulose acetate, polyester, polyethyleneterephthalate, and the like can be used. The protective layer can contain any known additives for providing specific characteristics to the resulting phosphor screen, such as, for example, antistatic compounds, matting agents, filter dyes, lubricants, glossing agents, and the like.

An interlayer can be provided between the substrate and the phosphor layer. Metallized or metal oxide layers can be interposed between the substrate and the phosphor layer for improving the reflectance of the screen. A graphite layer can also be interposed for improving image quality.

## EXAMPLES

### EXAMPLE 1

Several terbium activated gadolinium oxysulphide phosphor powders having different grain size were mixed with water at neutral pH according to the following Table 1.

TABLE 1

| $Gd_2O_2S$:Tb Powder | Grain Size Range ($\mu$m) | Concentration (g/l) |
|---|---|---|
| A | 6.5-7.5 | 1000 |
| B | 1-7.5 | 1000 |
| C | 1.0-2.0 | 600 |
| D | * | 600 |

\* Powder D is a 1/1 mixture of powders B and C

Each dispersion was added with 2% w/w of Peptapon™ 99 (an aluminum silicate manufactured by Ceramco) and 1% w/w of Dolapix PC 75 (a synthetic alkali-free polyelectrolyte manufactured by Ceramco) in order to stabilize the dispersion and to promote the adhesion to the substrate.

The viscosity of the resulting dispersion was in the range of from 200 to 300 cps at room temperature.

The phosphor dispersions were coated by means of a spraying apparatus on sintered $Al_2O_3$ substrates having a thickness of 250 or 650 $\mu$m. The temperature of the substrate during coating was held at about 120°C.

The resulting coatings were then subjected to a sintering process consisting of a burn-off treatment at 450°C for three hours followed by a sintering treatment at 1450°C for a period of from one to six hours as for the following Table 2. The sintering process was performed in an atmosphere of nitrogen and hydrogen at a $N_2/H_2$ volume ratio equal to 90/10 with an oxygen impurity level lower than 20ppm. The final phosphor screens were tested for evaluating their speed and image quality performance in comparison with a conventional Trimax™ T2 Screen, manufactured by Imation Corp. (Reference Screen 1) and with a non-sintered control screen 2. The screens were tested at 40kV using a commercial Trimax™ HM Radiographic Film (manufactured by Imation Corp.). The speed value has been normalized to the reference screen 1 and expressed in Din. The visual resolution value has been measured with a standard target and expressed in lp/mm. The granularity has been expressed by scholastic score from 0 to 3, where 3 represents a better result.

The results have been summarized in the following Table 2.

TABLE 2

| Screen | 1 Reference | 2 Control | 3 Invention | 4 Invention | 5 Invention | 6 Invention |
|---|---|---|---|---|---|---|
| Powder | B | B | A | B | C | D |
| Sintering Time (hour) | - | - | 1 | 6 | 6 | 2 |
| Coating Weight (g/m$^2$) | 280 | 342 | 325 | 346 | 321 | 335 |
| Support Thickness ($\mu$m) | - | 250 | 650 | 650 | 650 | 650 |
| Thickness ($\mu$m) | 70 | 83 | 80 | 71 | 53 | 57 |
| Packing Density (%) | 54 | 55 | 54 | 65 | 80 | 78 |
| Speed (Din) | 0 | 0.30 | 2.50 | 1.20 | 1.20 | 2.65 |
| Visual Resolution | 10 | >>10 | >10 | >10 | >>10 | >10 |

TABLE 2 (continued)

| Granularity | 0 | 2 | 0 | 3 | 0 | 1 |
|---|---|---|---|---|---|---|

By comparing reference sample 1 with sample 3, it is evident that the method of the present invention can provide an intensifying screen having a higher sensitivity at better image quality, in spite of using larger phosphor powder grain size and keeping constant the packing density.

By comparing samples 1 and 2 with sample 4, it is evident that when using a phosphor powder of equal grain size, the method of the present invention can provide an intensifying screen of better sensitivity and image quality.

The best results in terms of both sensitivity and image quality are obtained with samples 5 and 6, employing a fine phosphor powder grain size and a mixture of fine and large phosphor powder grain size, respectively.

**EXAMPLE 2**

The procedure of Example 1 was repeated by using powder B at a coating weight of about 330 $g/m^2$ with a sintering temperature of 1450°C for a period of four hours (Screen 7). A second sample was not subjected to sintering process (Screen 8). Speed and MTF of screens 7 and 8 have been compared with commercial Trimax™ T1 and T2 screens (manufactured by Imation Corp.).

The results are summarized in the following Table 3.

TABLE 3

| Screen | Trimax T1 | Trimax T2 | 7 | 8 |
|---|---|---|---|---|
| Packing density (%) | 54 | 54 | 66 | 57 |
| Coating Weight ($g/m^2$) | 145 | 280 | 330 | 325 |
| Speed (Din) | -1.35 | 0 | 0.65 | 0 |
| MTF at 3lp/mm | 0.85 | 0.64 | 0.80 | 0.83 |

The results of Table 3 clearly show that screen 7 can achieve a well higher level of speed respect to Trimax™ T2 screen and unsintered screen 8, still maintaining the MTF value of a lower speed Trimax™ T1 screen.

**EXAMPLE 3**

The procedure of Example 1 was repeated by using powder A at a coating weight of about 310 $g/m^2$ with a sintering temperature of 1450°C for a period of five hours (Screen 9). Speed and MTF of screen 9 have been compared with commercial Trimax™ T2 screen (manufactured by Imation Corp.). The results are summarized in the following Table 4.

TABLE 4

| Screen | Trimax T2 | 9 |
|---|---|---|
| Packing density (%) | 54 | 62 |
| Coating Weight ($g/m^2$) | 280 | 313 |
| Speed (Din) | 0 | 3.05 |
| MTF at 3lp/mm | 0.60 | 0.65 |

The results of Table 4 clearly show that screen 9 can achieve a well higher level of speed respect to Trimax™ T2 screen, together with an MTF value even better than the MTF value of the Trimax™ T2 screen.

**EXAMPLE 4**

The procedure of Example 1 was repeated by using powders A at higher coating weight with a sintering temperature of 1450°C for a period of five hours. Speed and visual resolution of screen 10 have been compared with commercial Trimax™ T16 screen (manufactured by Imation Corp.).

The results are summarized in the following Table 5.

TABLE 5

| Screen | Trimax T16 | 10 |
|---|---|---|
| Packing density (%) | 56 | 59 |
| Coating Weight (g/m$^2$) | 1070 | 1055 |
| Speed (Din) | 0 | 0.2 |
| Visual resolution | 4.5 | 6 |
| Granularity | 0 | 1 |

The data of Table 5 clearly show that the method of the present invention allows to obtain a screen having a speed comparable to that of a faster conventional screen, but with the image quality of slower conventional screens.

**Claims**

1. A method for manufacturing radiographic intensifying screens comprising the following steps:

   a. preparing a phosphor dispersion,
   b. spraying said phosphor dispersion onto a substrate, and
   c. sintering the resulting phosphor layer.

2. The method according to claim 1, wherein said phosphor dispersion is made by using a solid dispersing medium.

3. The method according to claim 2, wherein said phosphor dispersion comprises a phosphor to dispersing medium weight ratio of from 10:1 to 100:1.

4. The method according to claim 1, wherein said phosphor dispersion is made by using an organic or inorganic liquid dispersing medium.

5. The method according to claim 4, wherein said phosphor dispersion is made in water.

6. The method according to claims 4 and 5, wherein said phosphor dispersion comprises a phosphor to dispersing medium weight ratio of from 1:10 to 2:1

7. The method according to claim 4, wherein said phosphor dispersion has a viscosity in the range of from 10 to 1000 cps at room temperature.

8. The method according to claim 1, wherein said phosphor is selected from the group consisting of direct emission phosphors and storage phosphors.

9. The method according to claim 8, wherein said direct emission phosphor is selected from the group consisting of rare earth activated rare earth oxysulfide phosphors, rare earth activated rare earth oxyhalide phosphors, rare earth borate phosphors, rare earth phosphate phosphors, rare earth tantalate phosphors, alkaline earth sulfate phosphors, rare earth activated alkaline earth fluoro halide phosphors, rare earth or alkaline earth silicate phosphors, rare earth activated rare earth oxyde phosphors, alkali and alkaline earth halide phosphors, rare earth activated rare earth aluminate phosphors, alkaline earth tungstate phosphors, alkali metal activated rare earth niobate or tantalate phosphors, and Zn and Cd based sulfide phosphors.

10. The method according to claim 9, wherein said rare earth element is selected from the group consisting of yttrium, europium, lanthanum, gadolinium, lutetium, terbium, cerium, praseodymium, thulium, dysprosium, ytterbium, holmium, and erbium.

11. The method according to claim 8, wherein said direct emission phosphor is a rare earth activated rare earth oxysulfide phosphor represented by the following general formula:

$$(Ln_{1-a-b}, Ln'_a, Ln''_b)_2O_2S$$

wherein Ln is at least one rare earth element selected from lanthanum, gadolinium, yttrium and lutetium, Ln' is at least one rare earth element selected from terbium, praseodymium, and europium, Ln" is at least one rare earth element selected from cerium, dysprosium, thulium, holmium, erbium, and ytterbium and a and b are numbers meeting the conditions $0.0005 \leq a \leq 0.09$ and $0 \leq b \leq 0,01$, respectively.

12. The method according to claim 8, wherein said storage phosphor is selected from the group consisting of rare earth activated alkaline earth metal fluoro halide phosphors, cerium or terbium activated rare earth halide phosphors, cerium activated rare earth oxyhalide phosphors, rare earth activated strontium sulfide, rare earth oxyde phosphors, mixtures of europium activated alkali metal and alkaline earth metal halide phosphors, bismuth activated alkali metal halide, rare earth activated alkaline earth halosilicates, rare earth halosilicates, and alkali halide.

13. The method according to claim 1, wherein said phosphor has a grain size in the range of from 0.1 to 20 $\mu$m.

14. The method according to claim 1, wherein said substrate is selected from the group consisting of metal foils such as aluminum foil and aluminum alloy foil, metal sheets, monocrystalline Si sheets, $SiO_2$ sheets, $Al_2O_3$ sheets, corderite sheets, steatite sheets and ceramic sheets.

15. The method according to claim 13, wherein said substrate has a thickness of from 0.1 and 1 mm.

16. The method according to claim 2, wherein, during said spraying step, said substrate is held at a temperature higher than the softening point of said solid dispersing medium.

17. The method according to claims 4 and 5, wherein, during said spraying step, said substrate is held at a temperature in the range of from 20°C below to 50°C above the boiling point of said liquid dispersing medium.

18. The method according to claim 1, wherein the sprayed phosphor layer is subjected to a compression treatment at a pressure of from 10 to 500 MPa.

19. The method according to claim 1, wherein said sintering step comprises a preliminary burn-off treatment at a temperature of from 150° to 600°C, for a period of time of from 1 to 5 hours.

20. The method according to claim 1, wherein said sintering step is performed at a temperature of from 600° to 1700°C for a period of time of up to 24 hours.

21. The method according to claim 19, wherein the increasing temperature ramp of said preliminary burn-off treatment is kept constant at a value of from 30° to 100°C per hour.

22. The method according to claim 1, wherein the increasing temperature ramp of said sintering step is kept constant at a value in the range of from 100° to 500°C per hour.

23. The method according to claim 1, wherein said sintering step is performed under oxygen free atmosphere.

24. The method according to claim 23, wherein said oxygen free atmosphere comprises up to 5% by volume of sulfur.

25. A radiographic intensifying screen consisting essentially of a support base, a binderless phosphor layer and a topcoat, wherein said binderless phosphor layer comprises a sintered phosphor selected from the group consisting of rare earth activated rare earth oxysulfide phosphors, rare earth activated rare earth oxyhalide phosphors, rare earth borate phosphors, rare earth phosphate phosphors, rare earth tantalate phosphors, alkaline earth sulfate phosphors, rare earth activated alkaline earth fluoro halide phosphors, rare earth or alkaline earth silicate phosphors, rare earth oxyde phosphors, alkali and alkaline earth halide phosphors, rare earth aluminate phosphors, alkaline earth tungstate phosphors, alkali metal activated rare earth niobate or tantalate phosphors, and Zn and Cd based sulfide phosphors.

26. The radiographic intensifying screen of claim 25, wherein said sintered phosphor is selected from the group consisting of rare earth activated rare earth oxysulfide phosphors.

27. The radiographic intensifying screen of claim 26, wherein said rare earth activated rare earth oxysulfide phosphors are represented by the following general formula:

$$(Ln_{1-a-b}, Ln'_a, Ln''_b)_2O_2S$$

wherein Ln is at least one rare earth element selected from lanthanum, gadolinium, yttrium and lutetium, Ln' is at least one rare earth element selected from terbium, praseodymium, and europium, Ln" is at least one rare earth element selected from cerium, dysprosium, thulium, holmium, erbium, and ytterbium and a and b are numbers meeting the conditions $0.0005 \leq a \leq 0.09$ and $0 \leq b \leq 0.01$, respectively.

28. The radiographic intensifying screen of claim 26, wherein said binderless phosphor layer has a packing density value higher than 50%.

29. The radiographic intensifying screen of claim 26, wherein said binderless phosphor layer has a packing density value higher than 70%.

Fig. 1

## EUROPEAN SEARCH REPORT

European Patent Office

Application Number

EP 97 11 1240

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE 42 24 931 A (SIEMENS)<br><br>* the whole document *<br>--- | 1,2,<br>8-11,18,<br>20,25-27 | G21K4/00<br>H01J9/22<br>C09K11/84 |
| A,D | EP 0 655 748 A (MINNESOTA MINING)<br><br>* the whole document *<br>--- | 1,8-10,<br>12,14,25 | |
| A,D | EP 0 253 348 A (FUJI PHOTO)<br><br><br>* the whole document *<br>--- | 1,4,<br>8-10,12,<br>14,19,<br>20,25 | |
| A,D | EP 0 175 578 A (KONISHIROKU PHOTO)<br><br>* the whole document *<br>----- | 1,2,<br>8-10,12,<br>14,25 | |

TECHNICAL FIELDS
SEARCHED      (Int.Cl.6)

G21K
H01J
C09K

The present search report has been drawn up for all claims

| Place of search | Date of completion of the search | Examiner |
|---|---|---|
| THE HAGUE | 26 November 1997 | Drouot, M-C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................................
& : member of the same patent family, corresponding
document

EPO FORM 1503 03.82 (P04C01)